# EUROPÄISCHE PATENTANMELDUNG

(11) **EP 0 834 755 A2**
(43) Veröffentlichungstag der Anmeldung: **08.04.1998**
(21) Anmeldenummer: 97402145.3
(22) Anmeldetag: 15.09.1997
(51) Int. Cl.: G02B 6/44

(54) **Optisches Kabel oder optisches Element**

(30) Priorität: 04.10.1996 DE 19640935
(71) Anmelder: ALCATEL ALSTHOM COMPAGNIE GENERALE D'ELECTRICITE, 75008 Paris (FR)
(72) Erfinder: Nothofer, Klaus, Dipl.-Ing., 40699 Erkrath (DE); Haag, Helmut, Dipl.-Phys., 52445 Titz (DE)
(74) Vertreter: Mende, Dirk

(57) **Zusammenfassung**

Ein optisches Kabel (1) oder ein optisches Element hat eine Mehrzahl von jeweils mehrere übereinander aneinandergefügte Lichtwellenleiter-Bändchen (11) aufweisenden Lichtwellenleiter-Bändchenstapeln (3) sowie eine äußere Hülle (7). Die Lichtwellenleiter-Bändchenstapel (3) sind übereinander und/oder nebeneinander und dabei parallel zueinander angeordnet. Ein solcher Aufbau eines optischen Kabels bzw. eines optischen Elements ermöglicht eine besonders hohe Packungsdichte der Lichtwellenleiter, so daß das optische Kabel bzw. das optische Element auch bei einer hohen Anzahl von darin angeordneten Lichtwellenleitern kleine Außenabmessungen aufweisen kann (Fig. 1).

## Beschreibung

Die Erfindung betrifft ein optisches Kabel oder ein optisches Element mit jeweils mehrere übereinander aneinandergefügte Lichtwellenleiter-Bändchen aufweisenden Lichtwellenleiter-Bändchenstapeln und einer äußeren Hülle.

Lichtwellenleiter-Bändchen weisen eine größere Zahl von Lichtwellenleitern auf, die flach und parallel zueinander in einer Ebene verlaufen und dabei zwischen zwei Klebefolien eingeschlossen oder mittels eines durch UV-Licht ausgehärteten Materials miteinander verbunden sind. Weltweit werden in zunehmendem Maße solche Lichtwellenleiter-Bändchen für die Herstellung von optischen Kabeln oder optischen Elementen verwendet. Die Lichtwellenleiter-Bändchen ermöglichen gegenüber den bekannten Hohl- oder Bündeladern mit einzeln und lose darin verlaufenden Lichtwellenleitern eine wesentlich höhere Packungsdichte und durch die definierte Position der einzelnen Lichtwellenleiter zueinander die Anwendung einfacherer Verbindungstechniken wie der Massenspleißtechnik.

Zur Unterbringung von Lichtwellenleiter-Bändchen in optischen Kabeln oder optischen Elementen ist es bekannt, mehrere Lichtwellenleiter-Bändchen übereinander zu einem Lichtwellenleiter-Bändchenstapel aneinanderzufügen und mit einer rohrförmigen Schutzhülle zu umschließen. Ein derartiges optisches Element kann als Zentralader verwendet oder eine Mehrzahl solcher optischer Elemente um ein zentrales Element verseilt werden. Es ist ebenfalls bekannt, Lichtwellenleiter-Bändchenstapel in den in Längsrichtung gerade oder gewendelt verlaufenden Nuten eines Kerns anzuordnen.

Allen diesen bekannten Konstruktionen für optische Kabel oder Elemente ist gemeinsam, daß durch die Anordnung der rechteckigen Lichtwellenleiter-Bändchenstapel innerhalb des Kabels oder Elements größere ungenutzte Querschnittsflächen vorhanden sind, die den Außendurchmesser und das Gewicht des optischen Kabels oder Elements unnötig vergrößern.

Ausgehend von diesem Stand der Technik liegt der Erfindung daher das Problem zugrunde, ein optisches Kabel oder ein optisches Element derart auszubilden, daß es bei einer hohen Zahl von Lichtwellenleitern dennoch sehr kompakte äußere Abmessungen aufweist.

Dieses Problem wird durch die Erfindung gelöst, indem die Lichtwellenleiter-Bändchenstapel übereinander und/oder nebeneinander und dabei parallel zueinander angeordnet sind.

Die durch die Erfindung erzielbaren Vorteile bestehen insbesondere darin, daß sich durch die Anordnung der Lichtwellenleiter-Bändchenstapel übereinander und/oder nebeneinander in Form einer rechteckigen Matrix eine besonders hohe Packungsdichte der Lichtwellenleiter in dem optischen Kabel bzw. dem optischen Element erreichen läßt und ungenutzte Querschnitte im optischen Kabel bzw. im optischen Element minimiert werden können. Ein erfindungsgemäßes optisches Kabel oder ein erfindungsgemäßes optisches Element weist daher auch bei einer hohen Anzahl von darin verlaufenden Lichtwellenleitern besonders geringe äußere Abmessungen auf und läßt sich einfach und kostengünstig herstellen. Darüber hinaus können durch die matrixartige Anordnung der Lichtwellenleiter-Bändchenstapel die einzelnen Lichtwellenleiter sehr einfach identifiziert und die Montagezeiten insbesondere beim Einsatz der bekannten Massenspleißtechnik mit speziellen Lichtwellenleiter-Bändchen-Steckern sehr kurz gehalten werden. Zudem können die Muffen sehr geringe Außenabmessungen aufweisen.

Das erfindungsgemäße optische Kabel läßt sich z. B. als Haupt- oder Ortsverbindungskabel verwenden. Das erfindungsgemäße optische Element eignet sich aufgrund seiner sehr geringen äußeren Abmessungen insbesondere für sogenannte Hybridkabel, bei denen neben Lichtwellenleitern zusätzlich elektrische Leiter beispielsweise zur Nachrichtenübertragung vorgesehen sind.

Durch die in den Unteransprüchen aufgeführten Merkmale sind vorteilhafte Weiterbildungen und Verbesserungen der Erfindung möglich.

Besonders vorteilhaft ist es, wenn die Lichtwellenleiter-Bändchenstapel innerhalb der äußeren Hülle gemeinsam tordiert sind. Durch die Tordierung der aus den einzelnen Lichtwellenleiter-Bändchenstapeln gebildeten Matrix lassen sich die Biegbarkeit des optischen Kabels bzw. des optischen Elements wesentlich verbessern und die beim Biegen auftretenden Dehnungen und Stauchungen der Lichtwellenleiter, die zu höheren optischen Dämpfungen führen können, deutlich reduzieren.

Von Vorteil ist es, wenn die Lichtwellenleiter-Bändchenstapel relativ zueinander verschiebbar sind. Wird das optische Kabel oder das optische Element gebogen, so können die einzelnen Lichtwellenleiter-Bändchenstapel aneinander entlang gleiten und sich so gegeneinander verschieben. Auf diese Weise werden unzulässig hohe Dehnungs- oder Stauchbeanspruchungen der Lichtwellenleiter beim Biegen des optischen Kabels oder des optischen Elements vermieden.

Drei Ausführungsbeispiele der Erfindung sind in der Zeichnung vereinfacht dargestellt und in der nachfolgenden Beschreibung näher erläutert. Es zeigen die Fig. 1 ein erstes erfindungsgemäßes Ausführungsbeispiel eines optischen Kabels, die Fig. 2 einen Lichtwellenleiter-Bändchenstapel, die Fig. 3 ein zweites erfindungsgemäßes Ausführungsbeispiel eines optischen Kabels sowie die Fig. 4 als drittes erfindungsgemäßes Ausführungsbeispiel ein in einem Hybridkabel angeordnetes optisches Element.

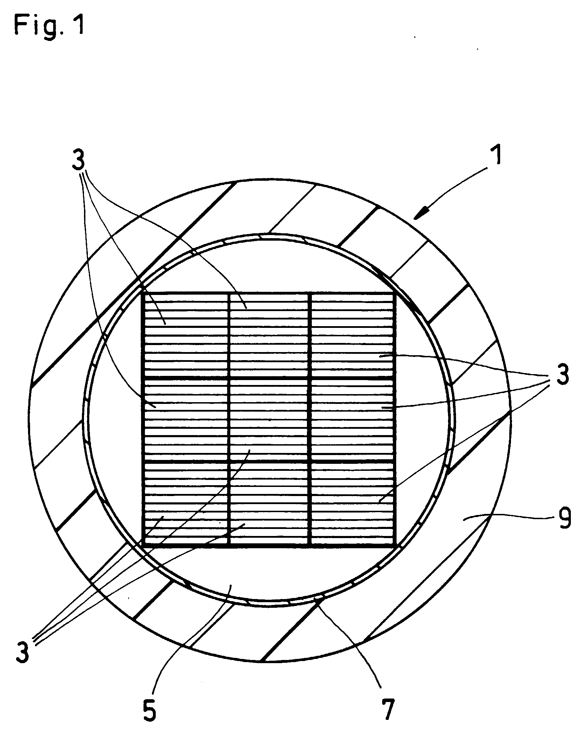

Das in der Fig. 1 beispielhaft dargestellte optische Kabel 1 weist z. B. neun parallel zueinander verlaufende Lichtwellenleiter-Bändchenstapel 3 auf, von denen jeweils drei übereinander und drei nebeneinander in Form einer quadratischen Matrix angeordnet sind. Dabei liegen die Lichtwellenleiter-Bändchenstapel 3 beispielsweise unmittelbar aneinander an und sind relativ zueinander verschiebbar. Es ist aber ebenfalls möglich, zwischen den einzelnen Lichtwellenleiter-Bändchenstapeln 3 dünne Folien anzuordnen, die die Lichtwellenleiter-Bändchenstapel 3 gegeneinander abpolstern und die relative Verschiebbarkeit zueinander verbessern. Die Lichtwellenleiter-Bändchenstapel 3 sind bei diesem Ausführungsbeispiel zum Schutz der Lichtwellenleiter gemeinsam mit großer Schlaglänge tordiert, in eine Füllmasse 5 eingebettet und von einer äußeren Hülle 7 umschlossen. Darüber ist z. B. ein Mantel 9 aus einem geeigneten Kunststoffmaterial vorgesehen.

Es ist selbstverständlich ebenfalls möglich, daß das optische Kabel 1 zusätzliche Schichten aufweist und daß im Mantel oder unterhalb des Mantels zusätzliche Verstärkungselemente zum Schutz der Lichtwellenleiter vor unzulässig hohen mechanischen Beanspruchungen angeordnet sind.

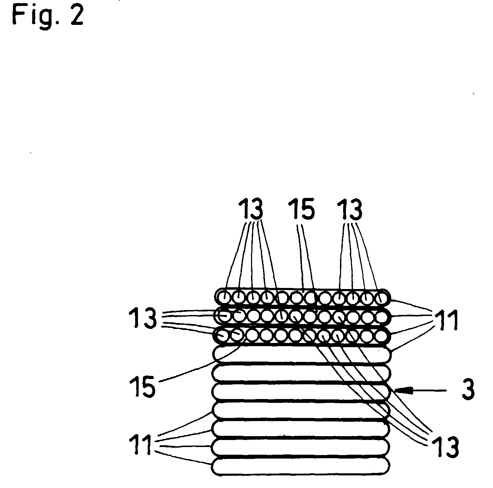

Die Fig. 2 zeigt beispielhaft einen Lichtwellenleiter-Bändchenstapel 3 des in der Fig. 1 dargestellten ersten Ausführungsbeispiels, der z. B. zehn übereinander aneinandergefügte Lichtwellenleiter-Bändchen 11 aufweist, von denen in der Fig. 2 der Einfachheit halber lediglich drei im Detail dargestellt sind. Jedes dieser Lichtwellenleiter-Bändchen 11 hat z. B. zwölf flach und parallel nebeneinander und in gleichen Abständen zueinander verlaufende Lichtwellenleiter 13, die von einem Bändchenmantel 15 umschlossen sind. Der Bändchenmantel 15 jedes Lichtwellenleiter-Bändchens 11 wird z. B. durch eine gemeinsame Beschichtung der zwölf Lichtwellenleiter 13 mit einem UV-aushärtbaren Material und einem anschließenden Aushärten dieses Materials mittels eines UV-Strahlers hergestellt. Die Lichtwellenleiter-Bändchen 11 jedes Lichtwellenleiter-Bändchenstapels 3 können zur einfacheren Herstellung des optischen Kabels 1 miteinander verbunden sein.

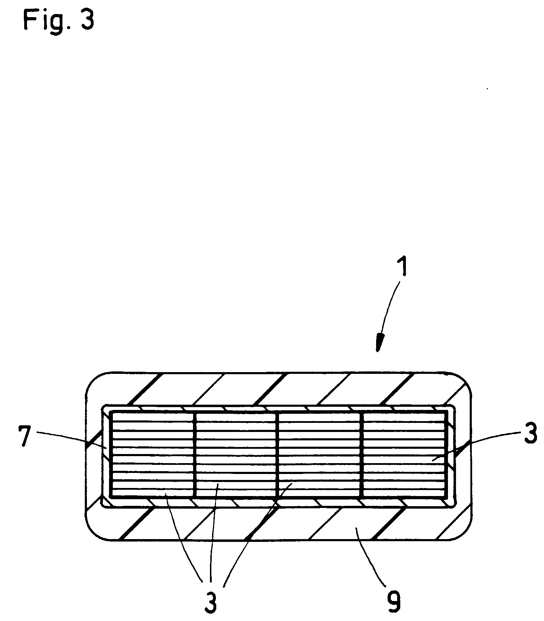

Bei dem in der Fig. 3 dargestellten zweiten erfindungsgemäßen Ausführungsbeispiel eines optischen Kabels 1 sind beispielsweise vier Lichtwellenleiter-Bändchenstapel 3, die z. B. den gleichen Aufbau wie der in der Fig. 2 dargestellte Lichtwellenleiter-Bändchenstapel 3 haben, in einer Ebene flach nebeneinander angeordnet. Die Lichtwellenleiter-Bändchenstapel 3 sind gemeinsam von einer äußeren Hülle 7 umschlossen, über der ein Mantel 9 aufgebracht ist. Wie zu dem ersten erfindungsgemäßen Ausführungsbeispiel ausgeführt, kann auch das optische Kabel 1 nach dem zweiten erfindungsgemäßen Ausführungsbeispiel zusätzliche Elemente und/oder Schichten aufweisen.

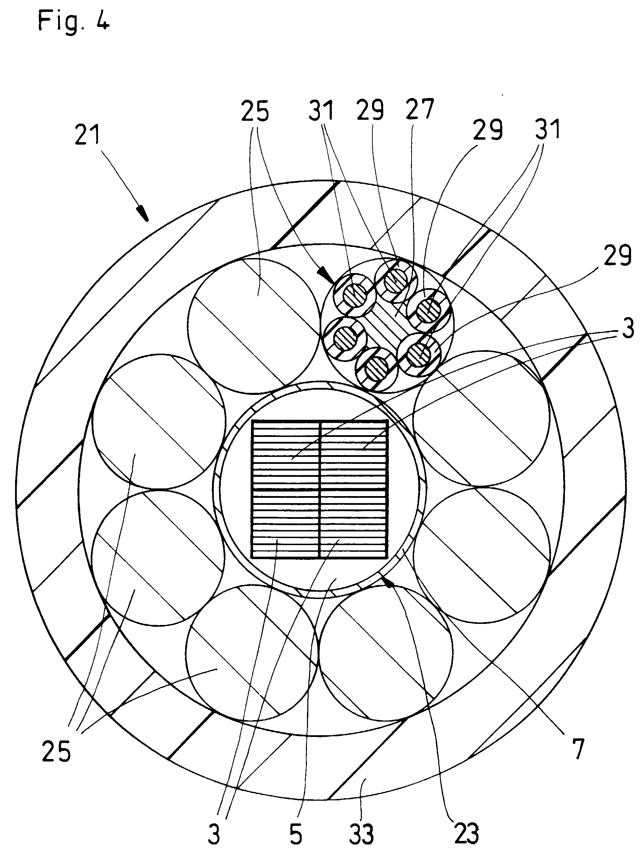

Das in der Fig. 4 beispielhaft dargestellte Hybridkabel 21 weist ein erfindungsgemäßes zentrales optisches Element 23 mit vier Lichtwellenleiter-Bändchenstapeln 3 auf. Die Lichtwellenleiter-Bändchenstapel 3 entsprechen beispielsweise dem in der Fig. 2 dargestellten Lichtwellenleiter-Bändchenstapel und haben jeweils zehn übereinander liegende Lichtwellenleiter-Bändchen. Jeweils zwei der Lichtwellenleiter-Bändchenstapel 3 sind übereinander und jeweils zwei nebeneinander und dabei parallel zueinander in Form einer quadratischen Matrix angeordnet, wobei die Lichtwellenleiter-Bändchenstapel 3 beispielsweise unmittelbar aneinander anliegen. Die Lichtwellenleiter-Bändchenstapel 3 sind gemeinsam mit großer Schlaglänge tordiert, in eine Füllmasse 5 eingebettet und von einer rohrförmigen äußeren Hülle 7 umschlossen. Um das derart ausgebildete zentrale optische Element 23 sind beispielsweise acht elektrische Adern 25 verseilt. Jede dieser elektrischen Adern 25, von denen in der Fig. 4 nur eine im Detail dargestellt ist, weist z. B. sechs um einen zentralen Kern 27 verseilte, mit einer elektrischen Isolierung 29 versehene elektrische Leiter 31 auf. Darüber ist bei dem dargestellten Ausführungsbeispiel ein Mantel 33 vorgesehen. Unterhalb des Mantels 33 können gegebenenfalls zusätzliche Schichten sowie im Mantel 33 Verstärkungselemente vorgesehen sein.

## Patentansprüche

1. Optisches Kabel oder optisches Element mit jeweils mehrere übereinander aneinandergefügte Lichtwellenleiter-Bändchen aufweisenden Lichtwellenleiter-Bändchenstapeln und einer äußeren Hülle, dadurch gekennzeichnet, daß die Lichtwellenleiter-Bändchenstapel (3) übereinander und/oder nebeneinander und dabei parallel zueinander angeordnet sind.

2. Optisches Kabel oder optisches Element nach Anspruch 1, dadurch gekennzeichnet, daß die Lichtwellenleiter-Bändchenstapel (3) innerhalb der äußeren Hülle (7) gemeinsam tordiert sind.

3. Optisches Kabel oder optisches Element nach Anspruch 1 oder 2, dadurch gekennzeichnet, daß die Lichtwellenleiter-Bändchenstapel (3) relativ zueinander verschiebbar sind.

4. Optisches Kabel oder optisches Element nach einem der Ansprüche 1 bis 3, dadurch gekennzeichnet, daß die Lichtwellenleiter-Bändchenstapel (3) flach nebeneinander angeordnet sind.
